# EUROPEAN PATENT APPLICATION

(11) **EP 3 032 667 A1**
(43) Date of publication of application: **15.06.2016**
(21) Application number: 15199191.6
(22) Date of filing: 10.12.2015
(51) Int. Cl.: H02G 3/04, H02G 3/22, H02G 15/013, F16L 5/04

(54) **PLUG FOR SINGLE CABLE**

(30) Priority: 11.12.2014 SE 1451519
(71) Applicant: Roxtec AB, 371 23 Karlskrona (SE)
(72) Inventor: HORN, Olaf, 22949 AMMERS (SE)
(74) Representative: Ström & Gulliksson AB

(57) **Abstract**

The present invention concerns a plug (1) having an inner opening (4) for receiving a cable. The plug (1) comprises a tube (2) and a plate (3) placed at one end of the tube (2). The inner opening (4) goes axially through the tube (2) and the plate (3). The inner opening (4) is closed off by a membrane (10). The membrane (10) is broken when a cable is received.

## Description

### Technical Field

The present invention concerns a plug for a single cable.

### Background

When cables are to be lead through walls, ceilings, roofs etc. some kind of transition giving a sealing effect is often used. Transitions of this kind may be used in many different environments, such as in houses, for cabinets, technical shelters, junction boxes and machines. They are used in different industrial environments, such as automotive, telecom, power generation and distribution, as well as marine and offshore.

In many installations there is a demand on a transit for a cable to withstand fire under specified conditions. It may be that the construction, in which the transition is placed, should hinder a fire on one side to spread to the other side for a specified time period. In for instance marine installations it is today common to insert cables through a drilled hole in the wall. The cable will then be sealed by using a liquid fire stop putty to ensure tightness against cold and hot smoke, as well as noise and to fulfill the fire ratings. This way of installation depends on the skill of the installer and the process is not easily reproducible.

### Summary

In view of the above there is a need of a solution giving a more consistent installation and which is not depending on the skill and performance of a craftsman. According to this application this is accomplished by providing a plug having a tube for receiving a cable. A plate is placed at one end of the tube and the tube has a central inner opening, for receiving the cable. The opening goes axially through the tube, but is closed off by a membrane.

The plug of the present invention is developed for use mainly in ships, in wall or ceiling constructions with fire class B15 and B0. But it may be used anywhere as a transit for a single cable. The plug is often installed without any cable. A cable can then be installed at any appropriate time. As stated above the plug has an inner central opening having a breakable wall, barrier or membrane. When a cable is to be received it is inserted in the inner opening trough the breakable wall, barrier or membrane.

The walls or ceilings for which the plug is designed are often made of two layers of steel plates with mineral wool or the like in-between. The plug may be used also for other wall or ceiling constructions. One example of another construction is that the walls are placed in U-constructions, which are penetrated by the plug of the present invention.

The plug has a number of grooves. The plug can be cut at any of said grooves to adapt the length of the plug to the thickness of the wall or ceiling receiving the plug.

The plug of the present invention is made in a relatively soft compressible material, in order to satisfy requirements like noise reduction and smoke tightness. The material used is a rubber or plastic material preferably having a hardness of Shore A70-90. The plug is for instance made of EAM ("Ethylene-Arcylic-Methylene"). To have an intumescent feature, 3 to 6% graphite could be added. The graphite will develop a kind of foam when exposed to heat, which foam during a fire will keep the temperature of the penetration on a lower level than without intumescent material (graphite).

Further objects and advantages of the present invention will be obvious to a person skilled in the art when reading the detailed description below.

### Brief Description of the Drawings

The invention will be explained further below by way of example and with reference to the enclosed drawings. In the drawings:

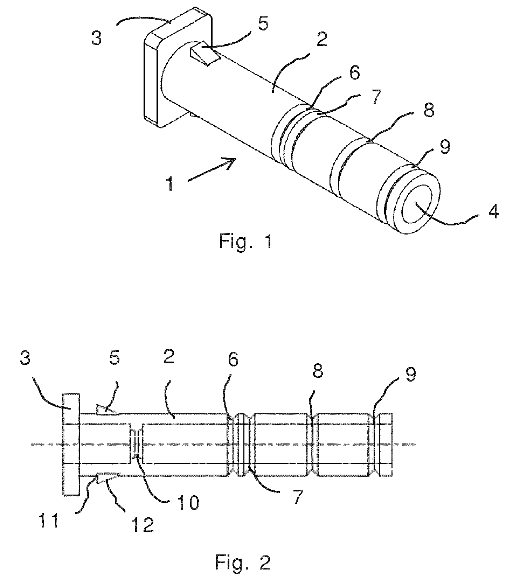

Fig. 1 is a perspective view of a plug according to the present invention, and
Fig. 2 is a side view of the plug of Fig. 1, with indicated inner parts.

### Detailed Description

As used in this description the expressions "axial", "radial" and similar expressions are in view of a cable received inside the plug of the present invention.

The plug 1 is formed of a tube 2 having a plate 3 at one axial end. The plug 1 is made in one piece. The tube 2 has a general cylindrical outer form. The plate 3 at one end of the tube 2 has a general rectangular form. An inner opening 4 goes through the centre of the tube 2 and trough the plate 3.

Two projections 5 are placed opposite each other on the outer periphery of the tube 2 and in the vicinity of the plate 3. The projections 5 project outward from the tube 2. In side view each projection 5 has a triangular shape, with one side 11 being perpendicular to the axial direction and one side 12 sloping from the side 11 being perpendicular to the axial direction. The sloping side 12 of each projection 5 slopes in axial direction towards the end of the plug 1 opposite the end having the plate 3. The function of said projections 5 will be discussed below.

The tube 2 has circumferential grooves 6, 7, 8, 9 on the outer circumference. The tube 2 may be cut at any of the grooves 6-9, in order to adapt the length of the plug 1 to the dimensions of different walls etc. receiving the plug 1. The axial length of the plug 1 and the placement of the grooves 6-9 can be adapted to standard thicknesses of the walls etc. to receive the plug 1. In one embodiment said standard thicknesses are 25mm and 50mm. In other embodiments the plug 1 may be adapted to other thicknesses. A person skilled in the art realizes that the exact number of circumferential grooves 6-9 can differ between different plugs 1. The number of groves is from one and upwards.

As indicated above the walls may be placed in U-constructions, which U-constructions only cover parts of the walls. The plug 1 will then normally penetrate both the U-construction and the wall. The outer diameter of the tube 2 of the plug 1 should correspond with the inner diameter of hole of the wall or ceiling to receive the plug 1.

The inner opening 4 of the tube 2, which inner opening 4 also goes through the plate 3, is not a through opening from the outset. The inner opening 4 is closed by a wall or membrane 10. The membrane 10 is placed inside the tube 1 somewhere between the groove 6 closest to the plate 3 and the plate 3. The membrane 10 is placed close to the middle of the plug 1 in one embodiment. When a cable is to be received it is pushed into the inner opening 4 of the plug, penetrating the membrane 10. If needed a tool, such as a screwdriver, is used to penetrate the membrane 9, before inserting the cable.

The inner diameter of the inner opening 4 of the plug 1 may be larger than the outer diameter of the cable received in the inner opening 4. One plug 1 will cover one size range of cable diameters and there may be a need for different plug sizes to cover other size ranges. By entering the cable through the plug 1, the membrane 10 will be punched and the lip of the membrane 10 will fit tightly onto the cable. Thereby smoke cannot penetrate the plug 1.

In the shown embodiment the rectangular plate 3 has two opposite sides close to the circumference of the tube 2, in radial direction. It is thereby possible to place the plug 1 in a hole close to a floor, wall or ceiling. If for instance the plug 1 is to be inserted in a through hole in a wall, said through hole may be placed close to an adjacent floor or ceiling. The only limitation in view of the plug 1 is that the distance between the through hole and the adjacent floor or ceiling should be larger than the smallest distance between the outer periphery of the tube 2 and the outer periphery of the plate 3.

In use it is first determined which axial length the plug 1 should have, depending on the thickness of the wall etc. to receive the plug 1. If a shorter plug 1 is desired, it is cut at one of the grooves 6-9. The plug 1 is then pushed into a through hole until the plate 3 abuts the wall or the like surrounding the hole. The projections 5 placed on opposite sides of the tube 2 will be compressed when the plug 1 is inserted in the through hole. Said projections 5 will thereby fix the plug 1 inside the through hole, in that the projections 5 will strive to resume their original positions. Thus, the projections 5 will exercise forces in radial direction on the inner wall of the through hole. In some embodiments the distance between the plate 3 of the plug 1 and the projections 5 corresponds with the thickness of a plate forming a layer of a wall. Thereby said plate will be placed between the plate 3 and the projections 5 when the plug 1 has been inserted. When and if a cable is to be received in the through hole having the plug 1, the cable is pushed through the inner opening 4 of the plug 1. This will additionally make it difficult for the projections 5 to go inwards, since the cable is occupying the space inside the plug 1. By this the cable is secured during cable routing and in the final application. The plug 1 will thereby remains safe in the wall or ceiling construction. If it is not possible to penetrate the membrane 10 inside the inner opening 4 of the plug 1 with the cable, a suitable tool, such as a screwdriver, is used to penetrate the membrane 10 before the cable is inserted.

## Claims

1. A plug (1) for a single cable comprising a tube (2) and a plate (3), placed at one end of the tube (2), wherein a central inner opening (4) goes axially through the tube (2) and the plate (3), which inner opening (4) is to receive a cable, wherein the inner opening (3) has a membrane (10) closing off the inner opening (4), **characterized in that** the tube (2) has one or more outer circumferential grooves (6-9) prepared to be cut in order to reduce the axial length of the plug (1) and that the plug (1) is made of a plastic or rubber material with 3 to 6% added graphite.

2. The plug (1) of claim 1, wherein the membrane (10) is thin enough to be broken by the cable or a tool.

3. The plug (1) of claim 1 or 2, wherein the tube has four outer circumferential grooves (6-9).

4. The plug (1) of claim 3, wherein the membrane (10) is placed in the area between the plate (3) and the groove (6) closest to the plate (3).

5. The plug (1) of any of the previous claims, wherein it is made in one piece.

6. The plug (1) of claim 5, wherein it is made of a rubber or plastic material having a hardness of Shore A70-90.

7. The plug (1) of claim 6, wherein it is made of EAM ("Ethylene-Acrylic-Methylene").

8. The plug (1) of any of the previous claims, wherein the plate (3) is rectangular and have two opposite sides placed adjacent the outer periphery of the tube (2).

9. The plug (1) of any of the previous claims, wherein two projections (5) are placed on opposite sides of the outer periphery of the tube (2) and in the vicinity of the plate (3).

10. The plug (1) of claim 9, wherein each projection (5) has a triangular shape in side view and having one side (11) perpendicular to the axial direction of the plug (1) and one side (12) sloping form the side (11) being perpendicular to the axial direction and towards the end of the plug (1) opposite the end having the plate (3).
